**Europäisches Patentamt**

**European Patent Office**

**Office européen des brevets**

(19)

(11) Numéro de publication : **0 347 298 B1**

## (12) FASCICULE DE BREVET EUROPEEN

(45) Date de publication du fascicule du brevet :
**16.09.92 Bulletin 92/38**

(51) Int. Cl.[5] : **G01N 21/53**

(21) Numéro de dépôt : **89401624.5**

(22) Date de dépôt : **12.06.89**

(54) **Procédé et dispositif de mesure de la visibilité à travers un milieu d'opacité variable.**

(30) Priorité : **14.06.88 FR 8808257**

(43) Date de publication de la demande :
**20.12.89 Bulletin 89/51**

(45) Mention de la délivrance du brevet :
**16.09.92 Bulletin 92/38**

(84) Etats contractants désignés :
**AT BE CH DE ES FR GB GR IT LI LU NL SE**

(56) Documents cités :
**FR-A- 1 524 104
FR-A- 2 440 550
US-A- 3 901 812
APPLIED OPTICS, vol. 21, no. 17, 1 septembre
1982, pages 3170-3177, Optical Society of
America; E. THOMALLA et al.:"Information
content of aerosol optical properties with respect to their size distribution"
APPLIED OPTICS, vol. 24, no. 21, 1 novembre
1985, pages 3523-3525, Optical Society of
America; T.L. BARBER et al.:"Visibility related
to backscatter 1.06 mum"**

(73) Titulaire : **UNIVERSITE DES SCIENCES ET
TECHNIQUES DE LILLE FLANDRES-ARTOIS
(LILLE 1)
Cité Scientifique
F-59655 Villeneuve d'Ascq Cédex (FR)**

(72) Inventeur : **Balois, Yves
Le Bourg Sarcey
F-69490 Pontcharra/Turdine (FR)**
Inventeur : **Deuze, Jean Luc
3 Allée de la Chataigneraie
F-59260 Hellemes (FR)**
Inventeur : **Gonzales, Louis
5 Chemin des Lansquenets
F-59700 Marcq en Baroeul (FR)**
Inventeur : **Herman, Maurice
25 rue Dhelemmes Nomain
F-59310 Orchies (FR)**
Inventeur : **Lecomte, Pierre
80 rue du peuple Belge
F-59800 Lille (FR)**
Inventeur : **Vanhoutte, Jean Claude
32 rue du 8 mai 45
F-59650 Villeneuve d'Ascq (FR)**
Inventeur : **Verwaerde, Christian
2 rue du Marais Tressin
F-59152 Chereng (FR)**

(74) Mandataire : **Ecrepont, Robert
Cabinet Ecrepont 12 Place Simon Vollant
F-59800 Lille (FR)**

## Description

L'invention se rapporte à un procédé et à un dispositif de mesure de la visibilité à travers un milieu diffusant d'opacité variable et notamment à un dispositif permettant de détecter l'apparition de brouillard et de déterminer la visibilité correspondante notamment pour adapter les conditions de circulation dans le domaine des transports routiers, fluviaux, maritimes ou aériens.

Dans ce domaine, la visibilité est la distance maximum à laquelle un objet peut être perçu par une personne de vision normale.

Elle dépend, d'une part, des particularités du brouillard, d'autre part des caractéristiques de l'objet (lumière émise ou réflectance de son matériau) et enfin de la façon dont le brouillard est éclairé (uniformément ou localement).

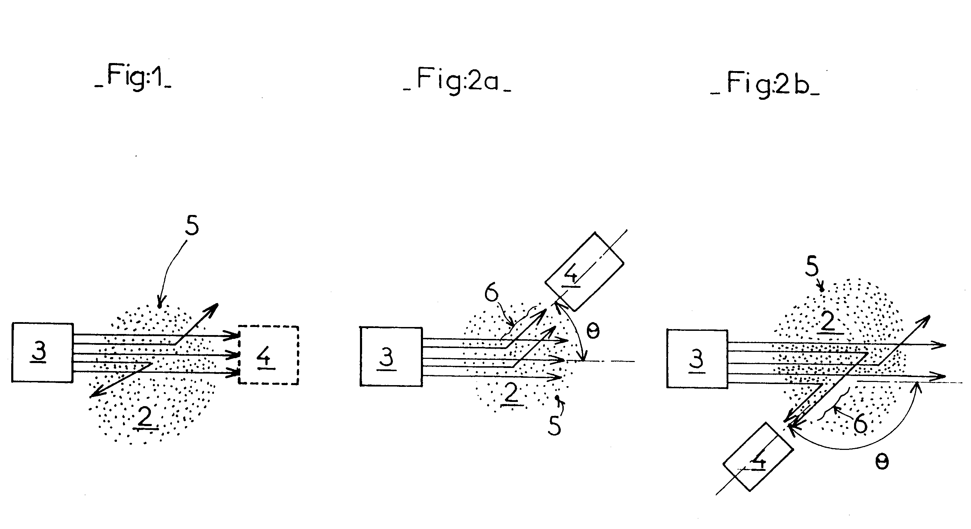

Les particularités du brouillard se traduisent par le coefficient de perte d'énergie d'un faisceau lumineux par unité de distance provoqué par la diffusion des gouttelettes (figure 1).

On sait que cette atténuation ou perte d'énergie est liée à un coefficient (K) de diffusion lumineuse des particules du milieu, telles les gouttelettes d'un brouillard, lesquelles suivant le type de brouillard peuvent avoir des granulométries différentes.

La granulométrie influe sur la probabilité pour les photons de se faire dévier d'un certain angle par diffusion (sur une gouttelette).

Cette probabilité de diffusion est généralement traduite par une variable dite fonction de phase des gouttelettes.

Pour une longueur d'onde $\lambda$ du rayonnement incident et une granulométrie des gouttelettes donnée, la théorie de Mie permet de calculer ces fonctions de phase et d'en tracer les courbes représentatives en fonction de l'angle de diffusion.

La visibilité (V) proprement dite dépend évidemment aussi, comme indiqué plus haut, d'une part des caractéristiques propres à l'objet à percevoir telles la lumière qu'il émet, sa réflectance ... et d'autre part, de l'éclairement reçu par le milieu.

Pour s'affranchir de ces variables, il suffit de se référer à la perception diurne, sous éclairement solaire, d'un objet qui n'émet pas de lumière et qui est de réflectance nulle (objet noir) ; la visibilité standard ($V_s$) est alors, dans cet exemple de l'application au brouillard, généralement fixée à trois virgule neuf divisé par le coefficient K ($V_s = 3,9/K$).

Dans la situation où l'on chercherait à déterminer le coefficient K, la seule quantité à déterminer serait donc le rapport entre les énergies du faisceau reçu et du faisceau initial ($E_x/E_o$).

Afin d'apprécier cette relation, on connaît de FR-A-2.229.322 un dispositif comprenant, face à face, à une certaine distance, un émetteur tel un projecteur et un récepteur tel une cellule photo-électrique ainsi qu'un circuit établissant le rapport entre l'énergie captée et l'énergie supposée émise dite de référence (figure 1).

Ce dispositif s'avère encombrant et complexe à mettre en place car il exige un bon alignement des projecteur et récepteur.

Aussi, pour remédier à au moins certains de ces inconvénients, on connaît des dispositifs qui, au lieu de mesurer la lumière transmise au travers du brouillard, mesurent la lumière diffusée par les gouttelettes de ce brouillard.

Selon l'un de ces dispositifs connus aussi de FR-A-2.478.815 on mesure la lumière diffusée vers l'avant c'est à dire déviée d'un angle $\theta$ compris entre 0 et 90° de sa direction d'émission ce qui bien entendu laisse pratiquement entier les problèmes liés à l'encombrement (figure 2a).

Selon d'autres dispositifs, on mesure la lumière rétro-diffusée c'est à dire pour un angle $\theta$ allant de 90° à 180° de la direction d'émission (figure 2b).

Dans un dispositif de ce genre connu de FR-A-2.584.497 l'axe du récepteur forme avec celui du projecteur un angle très plat, ce qui a l'avantage de permettre de regrouper projecteur et récepteur en un ensemble compact mais on a constaté que les mesures étaient entachées d'erreurs variant en fonction de la granulométrie du brouillard.

Afin de tenter de limiter ces erreurs de mesure, liées aux différentes granulométries des brouillards, selon un autre dispositif connu de FR-A-2.440.550 on mesure, sur un très large angle (d'au moins 45 à 110° et de préférence de 10 à 120°), la lumière tant diffusée que rétrodiffusée.

Si cela permet d'atténuer l'erreur, on note dans ce document que même avec une fourchette angulaire allant de 10 à 120°, l'erreur peut encore être de 11 %.

Un résultat que l'invention vise à obtenir est un procédé et un dispositif de rétrodiffusion qui assurent une mesure de la visibilité avec une précision indépendante de la granulométrie du brouillard.

A cet effet, elle a pour objet un tel procédé notamment caractérisé en ce qu'on mesure la rétrodiffusion dans la direction comprise dans la fourchette d'angles selon lesquels, pour la longueur d'onde propre à la lumière qui est émise, tendent à se confondre toutes les courbes de variation des fonctions de phase en fontion de l'angle entre la direction d'émission et celle de rétrodiffusion ces fonctions de phase étant propres chacune à un brouillard de granulométrie différente de celle des brouillards correspondants aux autres courbes.

Elle a également pour objet le dispositif en vue de la mise en oeuvre de ce procédé.

Elle sera bien comprise à l'aide de la description ci-après faite à titre d'exemple à l'aide du dessin ci-annexé qui représente schématiquement :

– figure 1 : le schéma de la mesure par transmission,

– figures 2a et 2b : les schémas de la mesure par diffusion et par rétrodiffusion,

– figure 3 : le schéma du dispositif,

– figures 4a à 4e : les courbes de granulométrie des différents types de brouillard connus, avec en abscisse le rayon des particules en microns et en ordonnée le nombre de particules par unité de volume (unité arbitraire),

– figures 5a à 5f : pour chaque type de brouillard présenté sur les figures 4, les courbes de fonction de phase pour différentes longueurs d'onde, avec en abscisse l'angle de diffusion en degrés et en ordonnée l'indice de diffusion,

– figure 6 : la courbe de variation en fonction de la longueur d'onde de l'angle $\theta p$ pour lequel les courbes tracées sur les figures 5 se rejoignent.

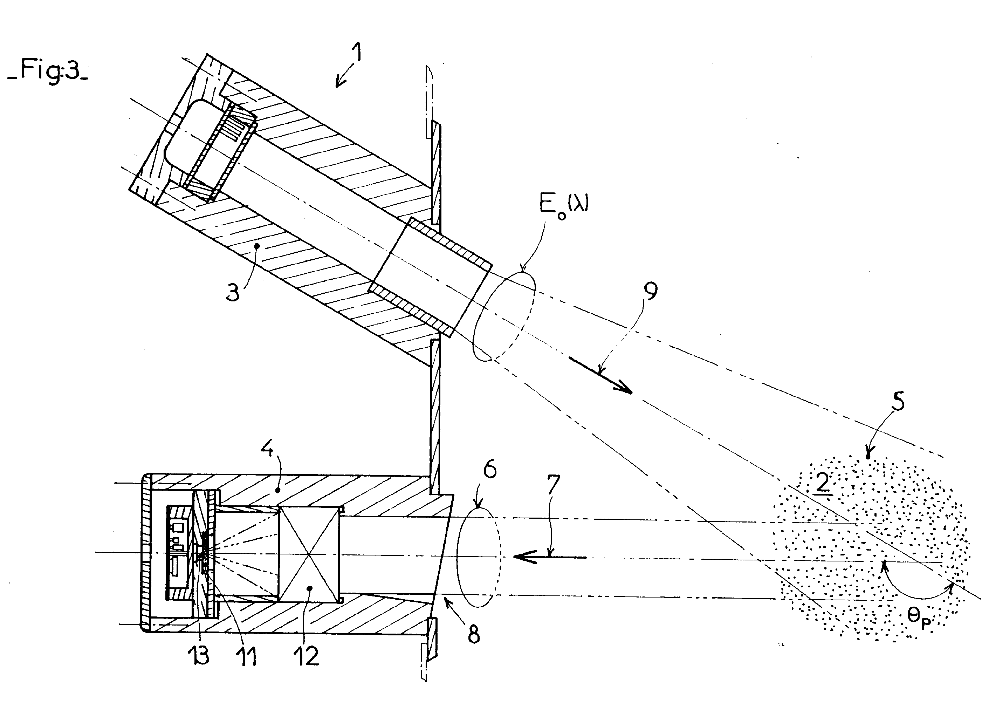

En se reportant à la figure 3, on voit un dispositif 1 de mesure de la visibilité à travers un milieu 2 tel une zone sujette à brouillards afin de détecter l'apparition de tels brouillards et d'y déterminer la visibilité correspondante c'est à dire la distance maximum (V) à laquelle un objet peut être perçu par une personne de vision normale.

A cet effet, le dispositif comprend un émetteur 3 d'un faisceau initial $E_o$ de lumière artificielle projetée sur le milieu 2 et un récepteur 4.

La présente invention s'applique, non pas à un dispositif de mesure de la transmission (figure 1) mais à un dispositif de mesure de la diffusion et plus spécialement à la rétrodiffusion (figure 2b) pour laquelle le récepteur 4 est disposé sensiblement au côté de l'émetteur 3 et, parmi la lumière diffusée par les particules 5 d'un milieu recevant le faisceau de lumière artificielle de l'émetteur 3, capte le flux 6 correspondant à la partie de cette lumière qui est renvoyée vers l'arrière et dans la direction 7 de l'entrée 8 de ce récepteur 4.

Tenant compte de ce renvoi vers l'arrière, la direction 7 précitée forme avec le faisceau initial un certain angle obtus $\theta p$.

Indépendamment du coefficient (K) qui est recherché, le flux 6 capté et donc le signal émis par le capteur 4 dépendent alors aussi, d'une part, d'une constante (A) établie par étalonnage et traduisant le dimensionnement de l'ouverture 8 du capteur 4 et, d'autre part, d'une valeur $(P_\theta)$ qui caractérise la façon dont la lumière diffusée par les particules 5 est distribuée dans l'espace donc la probabilité pour qu'un photon soit dévié dans la direction 7 précitée.

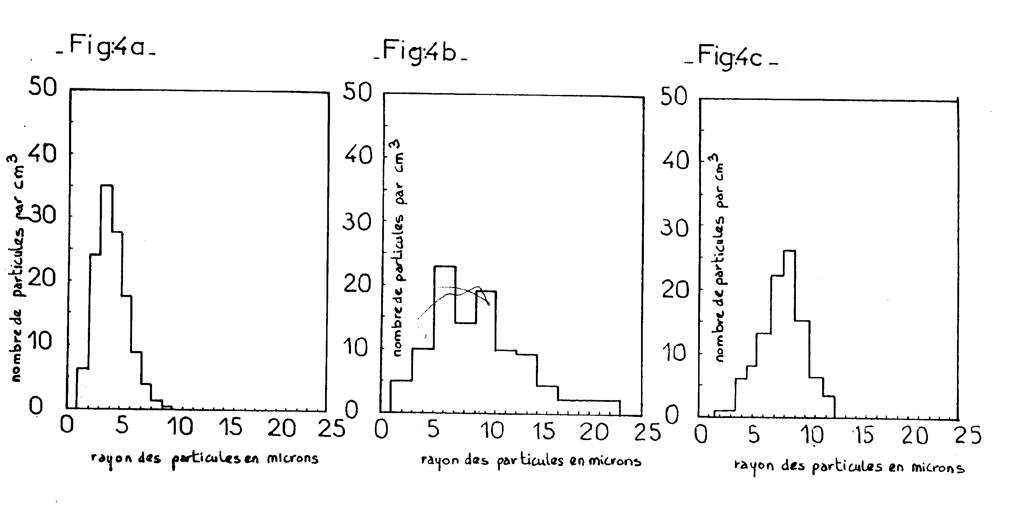

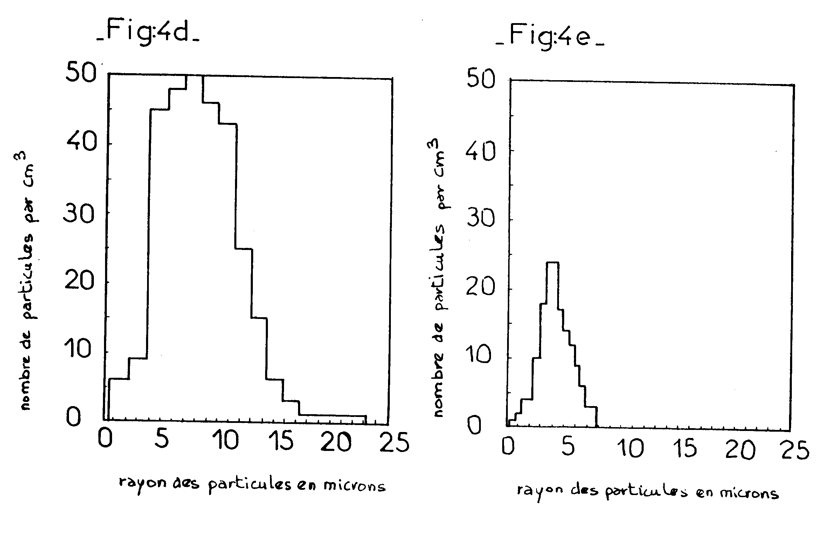

Pour la longueur d'onde $\lambda$ de la lumière émise, cette valeur $(P_\theta)$, dite fonction de phase, varie en fonction de l'angle $(\theta)$ et des caractéristiques des particules du milieu et notamment, dans l'exemple du brouillard de sa granulométrie (figures 4a à 4e).

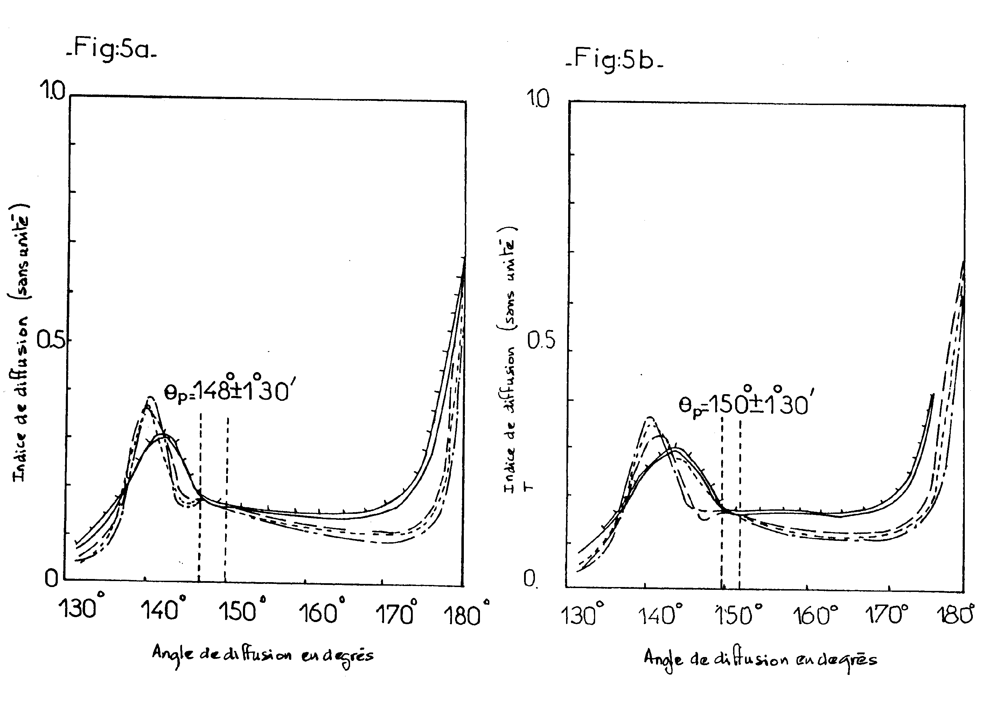

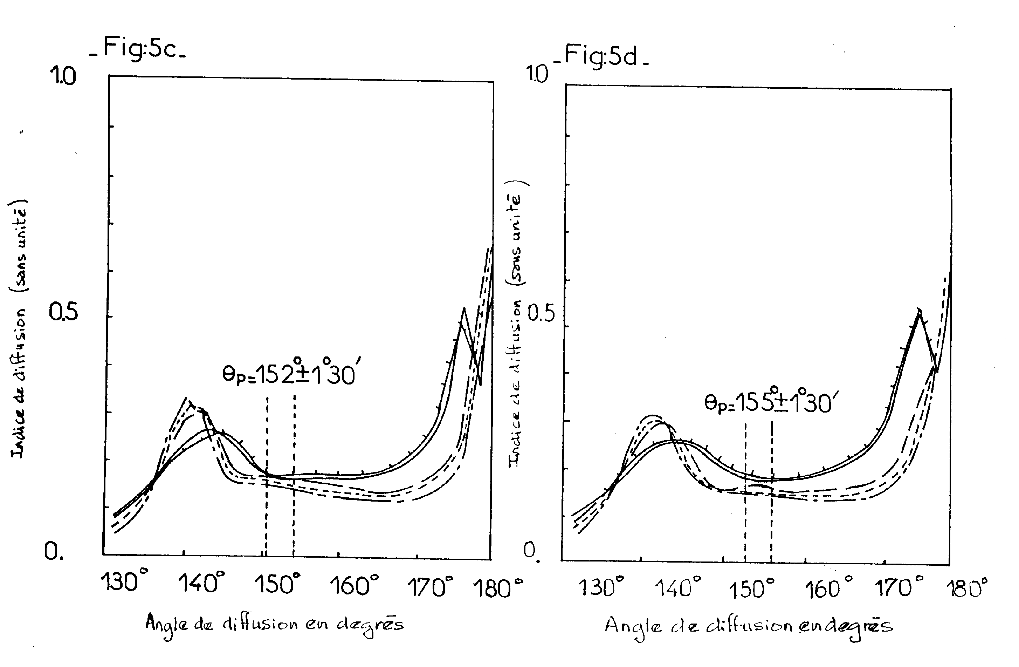

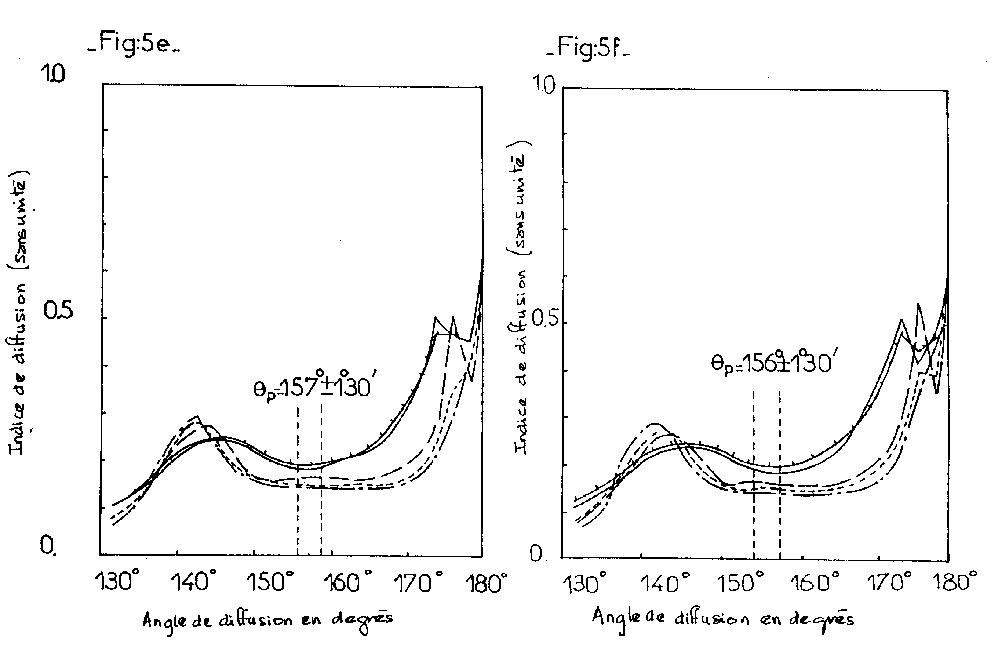

Comme représenté, sur les figures 5a à 5f, les inventeurs ont pour des longueurs d'onde réparties sur un intervalle spectral donné s'étendant ici de la lumière visible et de celle proche de l'infra-rouge, superposé les courbes de variation du coefficent de rétrodiffusion en fonction de l'angle $(\theta)$.

Chaque courbe est propre à un brouillard de granulométrie différente de celle des autres.

Par cette étude de nombreux échantillons de milieux de types différents et leur superposition, les inventeurs ont mis en évidence que, de manière surprenante et dans tous les cas, pour une longueur d'onde donnée, dans une fourchette restreinte d'angles de rétrodiffusion, de surcroît situés hors des zones habituelles de mesures, les fonctions de phase des différents échantillons tendaient à se confondre.

Aussi, selon une caractéristique essentielle du procédé de l'invention, on mesure la rétrodiffusion dans la direction 7 comprise dans la fourchette d'angles selon lesquels, pour la longueur d'onde $(\lambda)$ propre à la lumière qui est émise, tendent à se confondre toutes les courbes de variation des fonctions de phase en fontion de l'angle $(\theta)$ entre la direction d'émission et celle de rétrodiffusion, ces fonctions de phase étant propres chacune à un brouillard de granulométrie différente de celle des brouillards correspondant aux autres courbes.

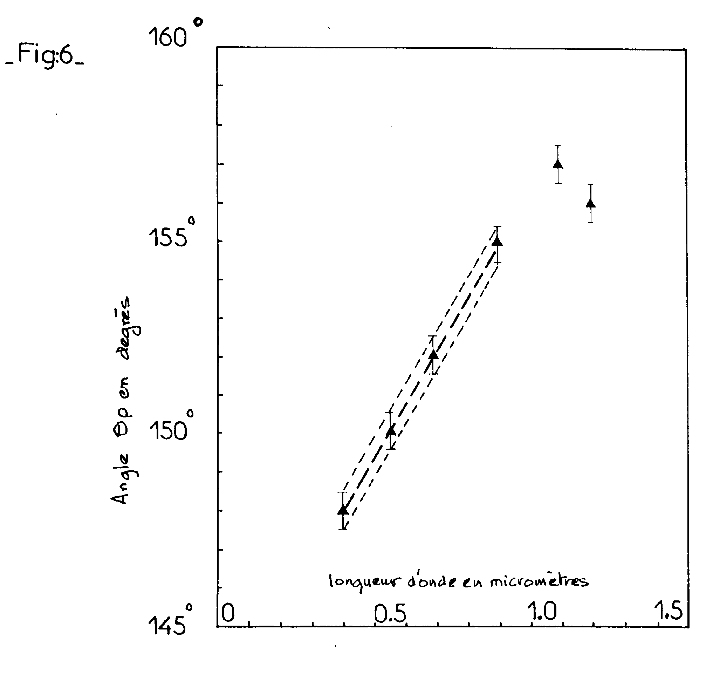

Les inventeurs ont également découvert que, pour une longueur d'onde $(\lambda)$ variant entre zéro virgule quatre et zéro virgule neuf micromètre, l'angle $(\theta p)$ (situé au centre d'une fourchette d'angles de plus ou moins un degré et trente minutes) suit une loi linéaire $\theta p = 15,384\lambda + 141,84$ avec $\theta p$ en degrés et $\lambda$ en micromètres (figure 6).

Aussi, selon une autre caractéristique de l'invention, afin d'éviter d'avoir à tracer et à superposer les courbes, l'angle $(\theta p)$ est déterminé avec la tolérance précitée en appliquant la dite loi linéaire.

Le dispositif en vue de la mise en oeuvre de l'invention (figure 3) est remarquable en ce qu'entre l'axe 9 du faisceau initial de l'émetteur et la direction 7 de rétrodiffusion dans laquelle est positionné le capteur 4, l'angle $(\theta p)$ est déterminé selon le procédé précité et donc de manière que, pour la longueur d'onde du faisceau initial, les courbes de fonction de phase tendent, pour une fourchette restreinte de valeur de $(\theta p)$, à se confondre pour les différents types de brouillard étudiés.

On a donc avec ce dispositif une mesure de visibilité du brouillard indépendante de la granulométrie de celui-ci.

Par exemple pour $\lambda = 0,66 \ \mu m$ correspondant à la longueur d'onde d'illumination de diodes électroluminescentes (LED), l'angle $\theta p$ est de 152° plus ou moins 1°30'.

En ce qui concerne l'émetteur, au lieu d'une source émettant une suite d'éclairs nécessitant des circuits électroniques complexes et trés onéreux ou un éclairement selon un large champ trés sensible à la lumière ambiante, selon l'invention, le faisceau initial est issu d'un ensemble de diodes électroluminescentes peu couteuses émettant, par exemple, une radiation de couleur rouge visible et ce faisceau est modulé par exemple à une fréquence de 244 Hz afin de le différencier de l'éclairage ambiant quant à lui constant sur la durée de la mesure.

Pour limiter la consommation des circuits, on met l'appareil "en pause" si la visibilité détectée est supérieure à une valeur prédéterminée (par exemple à un kilomètre) et ceci durant un temps donné (par exemple vingt minutes).

Par contre, si le seuil n'est pas atteint, on poursuit le fonctionnement du dispositif pour informer régulièrement sur l'évolution de la visibilité.

Pour éviter une saturation du capteur par un signal ambiant trop élevé, on filtre le rayonnement se dirigeant vers le détecteur à l'aide d'un filtre interférentiel 11 dont la bande passante est centrée sur la fréquence d'émission de l'émetteur, par exemple sur celle des diodes électroluminescentes.

On mesure le signal correspondant à l'éclairage ambiant qui influe sur la visibilité et ce en début de cycle avant allumage des diodes et on associe ce signal au message numérique envoyé par le dispositif.

Plutôt que d'intégrer une optique spécifique onéreuse, on limite le cône du faisceau initial par l'optique intégrée aux diodes utilisées.

Indépendamment du filtre 11 et d'une lentille d'entrée 12, le capteur comprend au foyer de la lentille un détecteur 13 tel une photodiode au silicium.

De préférence, tout en ayant leurs axes inclinés par rapport à l'autre organe de l'angle caractéristique $\theta$ p l'axe de l'un des organes que sont le capteur et l'émetteur, est horizontal ou (à partir de cet organe) au moins légèrement incliné vers le sol et l'autre organe est disposé au dessus de lui ce qui abrite les optiques des salissures.

## Revendications

1. Procédé de mesure de la visibilité à travers un milieu (2) tel une zone sujette à brouillards afin de détecter l'apparition de tels brouillards et d'y déterminer la visibilité correspondante c'est à dire la distance maximum (V) à laquelle un objet peut être perçu par une personne de vision normale, lequel dispositif comprend un émetteur (3) d'un faisceau initial ($E_o$) de lumière artificielle projetée sur le milieu (2) et un récepteur (4) qui, pour mesurer la rétrodiffusion, est disposé sensiblement au côté de l'émetteur (3) et capte, parmi la lumière diffusée par les particules (5) d'un milieu recevant le faisceau de lumière artificielle de l'émetteur (3), le flux correspondant à la partie de cette lumière qui est renvoyée vers l'arrière et dans la direction (7) de l'entrée (8) de ce récepteur (4), laquelle direction (7) forme avec le faisceau initial un certain angle obtus $\theta$p, procédé selon lequel, indépendamment du coefficient (K) de diffusion qui est recherché, on tient compte d'une part d'une constante (A) établie par étalonnage et traduisant le dimensionnement de l'ouverture (8) du capteur (4), et d'autre part d'une valeur ($P_\theta$) qui caractérise la façon dont la lumière diffusée par les particules (5) est distribuée dans l'espace et donc la probabilité pour un photon d'être dévié dans la direction (7) précitée, ce procédé étant **CARACTERISE** en ce qu'on mesure la rétrodiffusion dans la direction (7) comprise dans la fourchette d'angles selon lesquels, pour la longueur d'onde ($\lambda$) propre à la lumière qui est émise, tendent à se confondre toutes les courbes de variation des fonctions de phase en fontion de l'angle ($\theta$) entre la direction d'émission et celle de rétrodiffusion, ces fonctions de phase étant propres chacune à un brouillard de granulométrie différente de celle des brouillards correspondant aux autres courbes.

2. Procédé selon la revendication 1 **caractérisé** en ce que, pour une longueur d'onde ($\lambda$) variant entre zéro virgule quatre et zéro virgule neuf micromètre, l'angle ($\theta$ p), situé au centre d'une fourchette d'angles de plus ou moins un degré et trente minutes, suit la loi linéaire $\theta$ p = 15,384 $\lambda$ + 141,84 avec $\theta$ p en degrés et $\lambda$ en micromètres.

3. Procédé selon la revendication 2 **caractérisé** en ce que pour une longueur d'onde $\lambda$ = 0,66 $\mu$ m correspondant à la longueur d'onde d'illumination de diodes électroluminescentes, l'angle $\theta$ p est de 152° plus ou moins 1°30'.

4. Procédé selon l'une quelconque des revendications 1 à 3 **caractérisé** en ce qu'on met l'appareil "en pause" si la visibilité détectée est supérieure à une valeur prédéterminée et ceci durant un temps donné et en ce que, par contre, si le seuil n'est pas atteint, on poursuit le fonctionnement du dispositif pour informer régulièrement sur l'évolution de la visibilité.

5. Procédé selon la revendication 3 ou 4 **caractérisé** en ce que, pour éviter une saturation du capteur par un signal ambiant trop élevé, on filtre le rayonnement se dirigeant vers le détecteur à l'aide d'un filtre interférentiel (11) dont la bande passante est centrée sur la fréquence d'émission de l'émetteur.

6. Procédé selon l'une quelconque des revendications 1 à 5 **caractérisé** en ce qu'en début de cycle, avant allumage de l'émetteur, on mesure le signal correspondant à l'éclairage ambiant qui influe sur la visibilité puis on associe ce signal au message envoyé par le capteur.

7.  Procédé selon l'une quelconque des revendications 3 à 6 dont l'émetteur est formé de diodes électroluminescentes **caractérisé** en ce que, plutôt que d'intégrer une optique spécifique onéreuse, on limite le cône du faisceau initial par l'optique intégrée aux diodes utilisées.

8.  Dispositif pour la mise en oeuvre du procédé selon la revendication 1 de mesure de la visibilité à travers un milieu (2) tel une zone sujette à brouillards afin de détecter l'apparition de tels brouillards et d'y déterminer la visibilité correspondante c'est à dire la distance maximum (V) à laquelle un objet peut être perçu par une personne de vision normale, lequel dispositif comprend un émetteur (3) d'un faisceau initial ($E_o$) de lumière artificielle projetée sur le milieu (2) et un récepteur (4) qui, pour mesurer la rétrodiffusion, est disposé sensiblement au côté de l'émetteur (3) et capte, parmi la lumière diffusée par les particules (5) d'un milieu recevant le faisceau de lumière artificielle de l'émetteur (3), le flux correspondant à la partie de cette lumière qui est renvoyée vers l'arrière et dans la direction (7) de l'entrée (8) de ce récepteur (4), laquelle direction (7) forme avec le faisceau initial un certain angle obtus $\theta p$, dispositif selon lequel, indépendamment du coefficient (K) de diffusion qui est recherché, on tient compte d'une part d'une constante (A) établie par étalonnage et traduisant le dimensionnement de l'ouverture (8) du capteur (4), et d'autre part d'une valeur ($P_\theta$) qui caractérise la façon dont la lumière diffusée par les particules (5) est distribuée dans l'espace et donc la probabilité pour un photon d'être dévié dans la direction (7) précitée, ce dispositif étant **caractérisé** en ce que l'émetteur (3) et le capteur (4) forment entre eux un angle compris dans la fourchette d'angles selon lesquels, pour la longueur d'onde ($\lambda$) propre à la lumière qui est émise, tendent à se confondre toutes les courbes de variation des fonctions de phase en fontion de l'angle ($\theta$) entre la direction d'émission et celle de rétrodiffusion, ces fonctions de phase étant propres chacune à un brouillard de granulométrie différente de celle des brouillards correspondant aux autres courbes.

9.  Dispositif selon la revendication 8 **caractérisé** en ce que le faisceau initial est issu d'un ensemble de diodes électroluminescentes émettant une radiation modulée afin de la différencier de l'éclairage ambiant quant à lui constant sur la durée de la mesure.

10. Dispositif selon la revendication 8 ou 9 **caractérisé** en ce qu'indépendamment du filtre (11) et d'une lentille d'entrée (12), le capteur comprend au foyer de la lentille (12) un détecteur (13) tel une photodiode au silicium.

## Patentansprüche

1.  Verfahren zum Messen der Sichtweite durch ein Medium (2) beispielsweise in einem Nebelgebiet, zur Erfassung des Auftretens solcher Nebel und zur Bestimmung der entsprechenden Sichtweite daraus, d.h. der größtmöglichen Distanz (V), über die ein Gegenstand von einer normalsichtigen Person wahrgenommen werden kann, wobei die entsprechende Vorrichtung einen Sender (3) zum Aussenden eines Ausgangsstrahls ($E_o$) künstlichen Lichts aufweist, das auf das Medium (2) projiziert wird, sowie einen Empfänger (4), der zur Messung der Rückstreuung im wesentlichen auf der Seite des Senders (3) angeordnet ist und neben dem Licht, das von den Teilchen (5) eines das künstliche Licht vom Sender (3) aufnehmenden Mediums zerstreut wird, den Fluß aufnimmt, welcher dem Teil des Lichts entspricht, der nach hinten und in die Richtung (7) des Eintritts (8) des Empfängers (4) zurückgestrahlt wird, wobei die Richtung (7) mit dem Ausgangsstrahl einen bestimmten stumpfen Winkel $\Theta_p$ bildet, wobei bei diesem Verfahren unabhängig vom gesuchten Streukoeffizienten (K) einerseits eine Konstante (A) berücksichtigt wird, welche durch Eichung ermittelt und in die Bemessung der Öffnung (8) des Aufnehmers (4) umgesetzt wird, und andererseits ein Wert ($P_\theta$), welcher für die Art und Weise typisch ist, in der das von den Teilchen (5) gestreute Licht im Raum verteilt wird, und damit für die Wahrscheinlichkeit, mit der ein Photon in die genannte Richtung (7) abgelenkt wird, **dadurch GEKENNZEICHNET**, daß die Rückstreuung in die Richtung (7) innerhalb des Bereichs der Winkel gemessen wird, unter welchen bei der dem ausgestrahlten Licht eigenen Wellenlänge ($\lambda$) alle Schwankungskurven der Phasenfunktionen in Abhängigkeit vom Winkel ($\Theta$) zwischen der Abstrahlrichtung und der Rückstreurichtung die Tendenz zum Ineinanderfließen aufweisen, wobei diese Phasenfunktionen jeweils für einen Nebel eigentümlich sind, dessen Teilchengröße sich von der Teilchengröße anderer Nebel unterscheidet, die den anderen Kurven entsprechen.

2.  Verfahren nach Anspruch 1, **dadurch gekennzeichnet**, daß bei einer zwischen Null Komma vier und Null Komma neun Mikrometer schwankenden Wellenlänge ($\lambda$) der Winkel ($\Theta_p$), der in der Mitte eines Winkelbereichs von plus/minus einem Grad dreißig Minuten liegt, der linearen Beziehung $\Theta p = 15{,}384\ \lambda + 141{,}84$ entspricht, wobei $\Theta_p$ in Grad und $\lambda$ in Mikrometer

angegeben werden.

3. Verfahren nach Anspruch 2, **dadurch gekennzeichnet**, daß bei einer Wellenlänge $\lambda = 0{,}66$ µm, die der Wellenlänge zum Aufleuchten von Leuchtdioden entspricht, der Winkel $\Theta_p$ 152° +/- 1°30' beträgt.

4. Verfahren nach einem der Ansprüche 1 bis 3, **dadurch gekennzeichnet**, daß die Vorrichtung " auf Betriebspause " geschaltet wird, wenn während einer vorgegebenen Zeit die erfaßte Sichtweite über einem vorgegebenen Wert liegt, und daß der Betrieb der Vorrichtung dagegen weitergeführt wird, wenn der Schwellwert nicht erreicht wird, um so regelmäßig Informationen über die Entwicklung der Sichtweite zu liefern.

5. Verfahren nach Anspruch 3 oder 4, **dadurch gekennzeichnet**, daß zur Vermeidung einer Sättigung des Aufnehmers mit einem Signal aus der Umgebung, das einen zu hohen Pegel besitzt, die zum Detektor gerichtete Strahlung mit Hilfe eines Interferenzfilters (11) ausgefiltert wird, dessen Durchlaßbereich zur Sendefrequenz des Senders zentriert ist.

6. Verfahren nach einem der Ansprüche 1 bis 5, **dadurch gekennzeichnet**, daß bei Beginn des Arbeitszyklus vor dem Zünden des Senders das Signal gemessen wird, das den Lichtverhältnissen in der Umgebung entspricht, welche auf die Sichtweite Einfluß nehmen, und daß anschließend dieses Signal der Meldung zugeordnet wird, die der Aufnehmer vermittelt.

7. Verfahren nach einem der Ansprüche 3 bis 6, bei welchem der Sender auf Leuchtdioden gebildet ist, **dadurch gekennzeichnet**, daß der Kegel des Ausgangsstrahls durch die in die verwendeten Dioden eingebaute Optik begrenzt wird, statt mittels einer speziellen integrierten aufwendigen Optik.

8. Vorrichtung zur Durchführung des Verfahren nach Anspruch 1 zum Messen der Sichtweite durch ein Medium (2) beispielsweise in einem Nebelgebiet, zur Erfassung des Auftretens solcher Nebel und zur Bestimmung der entsprechenden Sichtweite daraus, d.h. der größtmöglichen Distanz (V), über die ein Gegenstand von einer normalsichtigen Person wahrgenommen werden kann, wobei die entsprechende Vorrichtung einen Sender (3) zum Aussenden eines Ausgangsstrahls ($E_o$) künstlichen Lichts aufweist, das auf das Medium (2) projiziert wird, sowie einen Empfänger (4), der zur Messung der Rückstreuung im wesentlichen auf der Seite des Senders (3) angeordnet ist und neben dem Licht, das von den Teilchen (5) eines das künstliche Licht vom Sender (3) aufnehmenden Mediums zerstreut wird, den Fluß aufnimmt, welcher dem Teil des Lichts entspricht, der nach hinten und in die Richtung (7) des Eintritts (8) des Empfängers (4) zurückgestrahlt wird, wobei die Richtung (7) mit dem Ausgangsstrahl einen bestimmten stumpfen Winkel $\Theta_p$ bildet, wobei bei dieser Vorrichtung unabhängig vom gesuchten Streukoeffizienten (K) einerseits eine Konstante (A) berücksichtigt wird, welche durch Eichung ermittelt und in die Bemessung der Öffnung (8) des Aufnehmers (4) umgesetzt wird, und andererseits ein Wert ($P_\theta$), welcher für die Art und Weise typisch ist, in der das von den Teilchen (5) gestreute Licht im Raum verteilt wird, und damit für die Wahrscheinlichkeit, mit der ein Photon in die genannte Richtung (7) abgelenkt wird, **dadurch gekennzeichnet**, daß der Sender (3) mit dem Aufnehmer (4) einen Winkel innerhalb des Bereichs der Winkel bildet, unter welchen bei der dem ausgestrahlten Licht eigenen Wellenlänge ($_7\lambda$) alle Schwankungskurven der Phasenfunktionen in Abhängigkeit vom Winkel ($\Theta$) zwischen der Abstrahlrichtung und der Rückstreurichtung die Tendenz zum Ineinanderfließen aufweisen, wobei diese Phasenfunktionen jeweils für einen Nebel eigentümlich sind, dessen Teilchengröße sich von der Teilchengröße anderer Nebel unterscheidet, die den anderen Kurven entsprechen.

9. Vorrichtung nach Anspruch 8, **dadurch gekennzeichnet**, daß der Ausgangsstrahl von einer Leuchtdiodenanordnung abgestrahlt wird, welche eine Strahlung aussendet, die zur Unterscheidung von den während der Dauer der Messung ihrerseits gleichbleibenden Lichtverhältnissen zu unterscheiden.

10. Vorrichtung nach Anspruch 8 oder 9, **dadurch gekennzeichnet**, daß der Aufnehmer unabhängig vom Filter (11) und von einer Eintrittslinse (12) im Brennpunkt der Linse (12) einen Detektor (13), beispielsweise eine Silizium-Photodiode, aufweist.

## Claims

1. Method of measuring visibility through a medium (2), such as a region subject to mists, in order to detect the appearance of such mists and to determine the corresponding visibility there, i.e. the maximum distance (V) at which an object can be seen by a person with normal vision, which device comprises a transmitter (3) of an initial beam

($E_o$) of artificial light projected on to the medium (2) and a receiver (4) which, in order to measure retrodiffusion, is located substantially next to the transmitter (3) and picks up, among the light diffused by the particles (5) of a medium receiving the artificial light beam from the transmitter (3), the flux corresponding to the part of this light which is sent backwards and in the direction (7) of the input (8) of the receiver (4), which direction (7) forms with the initial beam a certain obtuse angle θp, according to which method, independently of the coefficient (K) of diffusion being sought, account is taken on the one hand of a constant (A), which is established by calibration and represents the dimensions of the aperture (8) of the receiver (4), and on the other hand of a value (Pθ) characterising the way in which the light diffused by the particles (5) is distributed in space and therefore the probability that a photon is deflected in raid direction (7), the method being characterised in that retrodiffusion is measured in the direction (7) contained in the range of angles according to which, for the wavelength (λ) of the light emitted, all the curves of variation of the phase function as a function of the angle (θ) between the direction of emission and the direction of retrodiffusion tend to combine, each of these phase functions being associated with a mist of a different granulometry from that of the mist corresponding to the other curves.

2. Method according to claim 1, characterised in that, for a wavelength ( λ ) varying between 0.4 and 0.9 micrometers, the angle (θp), located at the centre of a range of angles of more or less one degree, thirty minutes, follows the linear law θp = 15.384λ + 141.84 with θp in degrees and λ in micrometers.

3. Method according to claim 2, characterised in that for a wavelength λ = 0.66 μm correspondig to the wavelength of illumination of electroluminescent diodes, the angle θp is 152°, plus or minus 1°30′.

4. Method according to any one of claims 1 to 3, characterized in that the apparatus is put "on pause" if the visibility detected is hiqher than a predetermined value for a given time, and in that if, on the contrary, the threshold is not reached, the device is allowed to continue functioning to provide regular information on the development of visibility.

5. Method according to either of claims 3 or 1, characterised in that, to avoid saturation of the receiver by too high an ambient signal, the radiation oriented towards the sensor is filtered by means of an interference filter (11), whose pass-band is centred on the emission frequency of the transmitter.

6. Method according to any one of claims 1 to 5, characterized in that at the start of a cycle, before ignition of the transmitter, the signal corresponding to ambient lighting and affecting visibility is measured, and then this signal is associated with the message sent by the receiver.

7. Method according to any one of claims 1 to 6, the transmitter being formed of electroluminescent diodes, characterised in that rather than incorporating a high specific optic, the cone of the initial beam is limited by the optic incorporated into the diodes used.

8. Device for carrying out the method according to claim 1 for measuring visibility through a medium (2), such as a region subject to mists, in order to detect the appearance of such mists and to determine the corresponding visibility there, i.e. the maximum distance (V) at which an object can be seen by a person with normal vision, which device comprises a transmitter (3) of an initial beam ($E_0$) of artificial light projected on to the medium (2) and a receiver (4) which, in order to measure retrodiffusion, is located substantially next to the transmitter (3) and picks up, among the light diffused by the particles (5) of a medium receiving the artificial light beam of the transmitter (3), the flux corresponding to the part of this light which is sent backwards and in the direction (7) of the input (8) of the receiver (4), which direction (7) forms with the initial beam a certain obtuse angle θp, according to which device, independently of the coefficient (K) of diffusion being sought, account is taken on the one hand of a constant (A), which is established by calibration and represents the dimensions of the aperture (8) of the receiver (4), and on the other hand of a value (Pθ) characterising the way in which the light diffused by the particles (5) is distributed in space and therefore the probability that a photon is deflected in said direction (7), the device being characterised in that retrodiffusion is measured in the direction (7) contained in the range of angles according to which, for the wavelength (λ) of the light emitted, all the curves of variation of the phase functions as a function of the angle (O) between the direction of emission and the direction of retrodiffusion tend to combine, each of these phase functions being associated with a mist of a different granulometry from that of the mist corresponding to the other curves.

9. Device according to claim 8, characterized in that the initial beam is generated by an assembly of electroluminescent diodes emitting a modulated radiation in order to differentiate from the ambient lighting, which is itself constant for the duration of measurement.

10. Device according to claim 8 or 9, characterised in that, independently of the filter (11) and of an input lens (12), the receiver comprises at the focus of the lens (12) a sensor (13) such as a silicon photodiode.

_Fig:1_

_Fig:2a_

_Fig:2b_

_Fig.3_

_Fig.4a_

_Fig.4b_

_Fig.4c_

nombre de particules par cm³

rayon des particules en microns

rayon des particules en microns

rayon des particules en microns

EP 0 347 298 B1

_Fig.4e_

nombre de particules par cm³

rayon des particules en microns

_Fig.4d_

nombre de particules par cm³

rayon des particules en microns

Fig:5a.

Fig:5b.

_Fig:5c_

_Fig:5d_

θp=152°±1°30'

θp=155°±1°30'

Indice de diffusion (sans unité)

Indice de diffusion (sans unité)

Angle de diffusion en degrés

Angle de diffusion en degrés

EP 0 347 298 B1

_Fig:5e_

_Fig:5f_

$\theta_P = 157°\pm130'$

$\theta_P = 156°\pm130'$

Indice de diffusion (sans unité)

Indice de diffusion (sans unité)

Angle de diffusion en degrés

Angle de diffusion en degrés

EP 0 347 298 B1

_Fig:6_

longueur d'onde en micromètres

Angle Θp en degrés

EP 0 347 298 B1

16